(19) Europäisches Patentamt
European Patent Office
Office européen des brevets

(11) **EP 1 111 486 B1**

(12) **FASCICULE DE BREVET EUROPEEN**

(45) Date de publication et mention
de la délivrance du brevet:
**21.07.2010 Bulletin 2010/29**

(51) Int Cl.:
***G05B 19/40*** *(2006.01)*     ***G05B 19/425*** *(2006.01)*

(21) Numéro de dépôt: **00403638.0**

(22) Date de dépôt: **21.12.2000**

(54) **Procédé de commande d'un volet roulant et dispositif de mise en oeuvre d'un tel procédé**

Verfahren und Vorrichtung zur Steuerung von Rolladen

Method and device for controlling a roller shutter

(84) Etats contractants désignés:
**DE ES IT**

(30) Priorité: **22.12.1999 FR 9916224**

(43) Date de publication de la demande:
**27.06.2001 Bulletin 2001/26**

(73) Titulaires:
- **LEGRAND**
  **87000 Limoges (FR)**
- **Legrand SNC**
  **87000 Limoges (FR)**

(72) Inventeur: **Cousy Jean-Pierre**
**87430 Verneuil sur Vienne (FR)**

(74) Mandataire: **Santarelli**
**14 Avenue de la Grande Armée**
**B.P. 237**
**75822 Paris Cedex 17 (FR)**

(56) Documents cités:
| | |
|---|---|
| **EP-A- 0 268 933** | **EP-A- 0 574 637** |
| **EP-A- 0 784 146** | **WO-A-97/43747** |
| **DE-C- 4 335 239** | **DE-U- 9 110 348** |
| **DE-U- 29 602 328** | **US-A- 5 369 342** |
| **US-A- 5 449 987** | **US-A- 5 654 739** |
| **US-A- 5 818 428** | |

**Description**

La présente invention concerne de manière générale la commande de volets roulants adaptés à prendre différentes positions dans une plage de positions comprises entre des fins de courses haute et basse.

Elle concerne plus particulièrement un procédé de commande d'un volet roulant positionné dans une position courante pour l'amener dans une position cible, ainsi qu'un dispositif de commande pour la mise en oeuvre de ce procédé.

On connaît déjà des procédés et dispositifs de commande de volets roulants, qui utilisent au moins un capteur de position du volet qui permet de repérer la position cible à atteindre par le volet lorsqu'un ordre est donné au volet d'aller à cette position cible sélectionnée par actionnement d'un clavier.

Ainsi, de tels dispositifs à capteur de position du volet fonctionnent en boucle dite "fermée", du fait que par l'intermédiaire du capteur de position qui envoie un signal relatif au positionnement du volet, ils vérifient que la positon cible sélectionnée par actionnement du clavier est bien atteinte par le volet roulant commandé.

On connaît également du document EP 0 574 637 un procédé de commande d'un volet roulant positionné dans une position courante pour l'amener dans une position cible, sans capteur de position du volet.

Plus particulièrement, ce procédé de commande comprend, à partir de l'actionnement d'un clavier, les étapes suivantes :

a) déterminer la position cible sélectionnée par actionnement du clavier,
b) déterminer le temps de déplacement du volet entre sa position courante et la position cible,
c) déterminer le sens de déplacement, montée ou descente, du volet pour qu'il atteigne la position cible sélectionnée à partir de sa position courante,
d) faire monter ou descendre le volet, pendant le temps déterminé à l'étape b) de sorte que le volet atteigne la position cible,
e) mémoriser la position cible en position courante du volet.

Un tel procédé fonctionne en boucle dite "ouverte", en déterminant à partir de l'actionnement du clavier le temps de montée ou de descente du volet pour qu'il atteigne à partir de sa position courante la position cible sélectionnée et en descendant ou en montant ledit volet pendant le temps déterminé.

Selon le procédé conforme à l'invention, lorsque la position cible sélectionnée par actionnement du clavier est supérieure ou égale, respectivement inférieure ou égale, à un seuil haut, respectivement bas, on amène directement le volet en fin de course haute respectivement basse, sans tenir compte du temps de déplacement du volet.

Dans ces cas particuliers, le procédé ne fonctionne pas en boucle dite "ouverte", mais en boucle dite "fermée" en attente d'une information sur l'ouverture des contacts fin de course de l'ensemble moteur.

Ce procédé comprend une opération d'initialisation effectuée lors de la mise sous tension du volet, qui comprend les étapes consistant à :

1) amener le volet jusqu'à une fin de course,
2) lancer un chronomètre,
3) amener le volet jusqu'à la fin de course opposée,
4) arrêter le chronomètre et lire la valeur du temps compté par le chronomètre, et
5) mémoriser ladite valeur du temps compté par le chronomètre comme étant le temps de déplacement du volet pour une course entière.

Selon un mode de réalisation préférentiel du procédé précité, lors de l'opération d'initialisation, à l'étape 1) on fait descendre le volet jusqu'en fin de course basse, à l'étape 3) on fait monter le volet jusqu'en fin de course haute, et à l'étape 5) le temps de déplacement du volet pour une course entière est un temps de montée.

Lors de l'opération d'initialisation du procédé conforme à l'invention, on initialise également une consigne de visualisation de sorte que l'on visualise la fin de course haute du volet.

Avantageusement, dans le procédé selon l'invention, lorsqu'à l'étape d) le volet atteint une fin de course haute ou basse alors que le temps déterminé à l'étape b) n'est pas encore totalement écoulé, on réalise une opération de mise à jour du temps de déplacement du volet pour une course entière.

Selon un mode de réalisation préférentiel du procédé conforme à l'invention, à l'étape a) on lit une valeur de résistance existant aux bornes d'un circuit résistif du clavier, et à l'étape b) on détermine le temps de déplacement du volet en fonction du temps de déplacement du volet pour une course entière, de la différence des valeurs de résistance correspondant à la position courante et à la position cible et de la différence des valeurs de résistance correspondant aux fins de courses haute et basse.

A partir de l'opération d'initialisation, dans le procédé selon l'invention, on visualise par allumage successif de moyens de visualisation le déplacement du volet entre sa position courante et la position cible.

Selon l'invention, on visualise la position courante du volet à tout instant, ainsi que la position cible si elle est différente de la position courante.

L'invention concerne également un dispositif de commande pour la mise en oeuvre du procédé précité qui comporte :

- un clavier représentatif de ladite plage de positions pour permettre à un utilisateur de sélectionner une position cible, et
- une unité de traitement apte, à partir de l'actionnement du clavier, à déterminer et à transmettre au volet une consigne d'appareil qui est un ordre de montée ou de descente, pendant un temps donné de sorte que ledit volet atteigne la position cible sélectionnée ;

dans lequel l'unité de traitement comprend des moyens pour amener directement le volet en fin de course haute respectivement basse lorsqu'une position cible est sélectionnée par actionnement du clavier au-dessus respectivement en dessous d'un seuil haut respectivement bas déterminé.

Selon le dispositif conforme à l'invention, la détermination du temps de montée ou de descente du volet est réalisée par l'unité de traitement à partir d'une opération d'initialisation au cours de laquelle l'unité de traitement fait faire au volet un trajet entre les fins de courses haute et basse, mesure le temps que met le volet à parcourir ledit trajet, et mémorise le temps mesuré.

Avantageusement, l'unité de traitement comprend des moyens pour, d'une part, mémoriser la position courante du volet et, d'autre part, lorsqu'une position cible du volet est sélectionnée par actionnement du clavier, déterminer et transmettre audit volet la consigne d'appareil pendant un temps donné pour qu'il atteigne, à partir de sa position courante, la position cible sélectionnée.

De plus, l'unité de traitement comprend des moyens pour réaliser l'opération de mise à jour du temps de déplacement du volet pour une course entière, lorsque le volet arrive en fin de course haute respectivement basse alors que le temps de montée respectivement de descente déterminé par ladite unité de traitement n'est pas encore totalement écoulé.

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est un schéma bloc représentatif des principaux éléments d'un mode de réalisation préférentiel du dispositif de commande selon l'invention relié à un volet roulant ;
- la figure 2 est un schéma d'un mode de réalisation du clavier du dispositif de commande de la figure 1 ;
- la figure 3 est un schéma d'un mode de réalisation de la touche d'arrêt du dispositif de la figure 1 ;
- la figure 4 est un schéma d'un mode de réalisation des moyens de visualisation du dispositif de la figure 1 ;
- la figure 5 est un schéma bloc représentatif des principaux éléments de l'unité de traitement du dispositif de la figure 1 ;
- la figure 6 est l'organigramme d'un programme de fonctionnement du dispositif de commande de la figure 1 ;
- la figure 7 est une courbe représentative de la position d'un volet roulant en fonction du temps, commandé par un dispositif de commande du type de celui représenté sur la figure 1 ;
- la figure 8 explicite les différentes étapes de l'opération d'initialisation du programme de fonctionnement représenté sur la figure 6 ;
- la figure 9 explicite les différentes étapes de l'opération de détermination de la consigne d'appareil et de la consigne de visualisation du programme de fonctionnement représenté sur la figure 6 ;
- la figure 10 explicite les différentes étapes de l'opération de détermination du niveau cible constituant une étape de l'opération représentée sur la figure 9 ;
- la figure 11 représente les différentes étapes de l'opération de commande du volet et de la visualisation constituant une étape de l'opération représentée sur la figure 9 ;
- la figure 12 est une vue de face d'un mode de réalisation d'un module utilisateur du dispositif de commande de la figure 1 ;
- la figure 13 représente une vue en coupe selon le plan C-C du module utilisateur représenté sur la figure 12 ;
- la figure 14 représente la variation de la consigne de visualisation en fonction de la valeur de la résistance lue par l'unité de traitement d'un dispositif de commande selon l'invention d'un volet roulant.

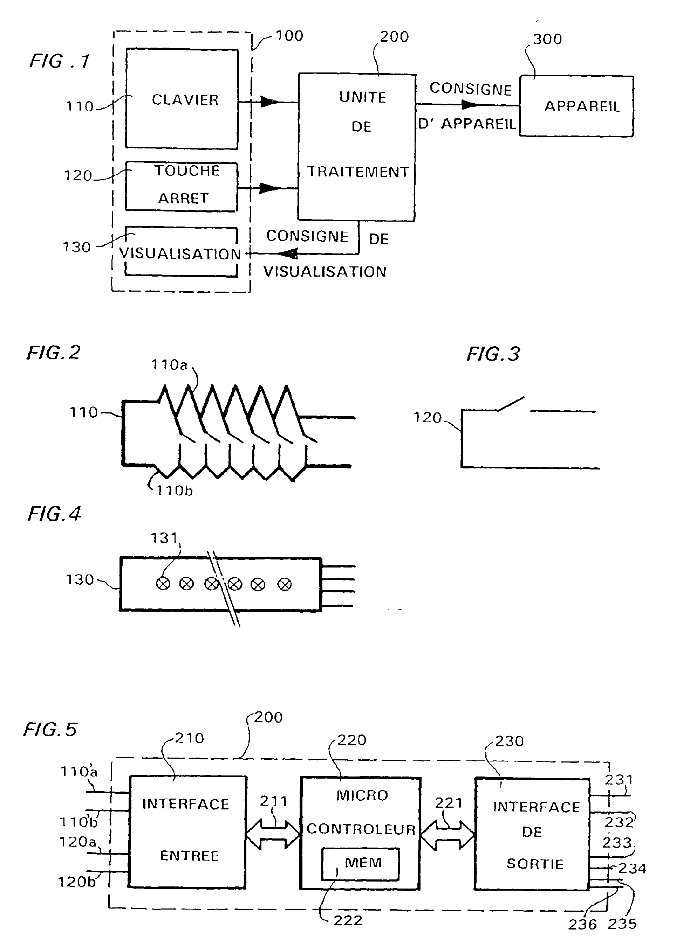

Sur la figure 1, on a représenté un schéma bloc d'une version préférée d'un dispositif de commande d'un volet roulant 300 adapté à prendre une position sélectionnée parmi une plage prédéterminée de positions comprises entre des fins de courses haute et basse.

Ce dispositif de commande comporte ici un clavier 110 représentatif de ladite plage de positions pour permettre à un utilisateur de sélectionner une position cible, une touche d'arrêt 120 dudit volet 300 et un unité de traitement 200 reliée en entrée au clavier 110 et à la touche d'arrêt 120, et en sortie au volet 300 pour :

- dans le cas où le volet 300 est à l'arrêt et le clavier 110 est actionné pour sélectionner une position cible, faire prendre au volet la position cible sélectionnée,
- dans le cas où le volet 300 est à l'arrêt et la touche d'arrêt 120 est actionnée, maintenir le volet à l'arrêt,
- dans le cas où le volet 300 est en fonctionnement et ledit clavier 110 est actionné pour sélectionner une position cible, faire prendre au volet la position cible sélectionnée si elle est différente de sa position courante, et
- dans le cas où le volet 300 est en fonctionnement et que la touche d'arrêt 120 est actionnée, arrêter ledit volet.

En outre, le dispositif de commande comprend ici des moyens de visualisation 130 de la position courante du volet 300, reliés à ladite unité de traitement 200.

Le clavier 110 est du type résistif (voir figure 2).

La touche d'arrêt 120 comprend un interrupteur (voir schéma électrique de la figure 3).

Les moyens de visualisation 130 comprennent ici au moins une rangée de diodes électroluminescentes 131 (voir figure 4).

Selon un mode de réalisation préférentiel du dispositif de commande représenté sur la figure 1, le clavier 110, la touche d'arrêt 120 et les moyens de visualisation 130 font partie intégrante d'un module utilisateur 100.

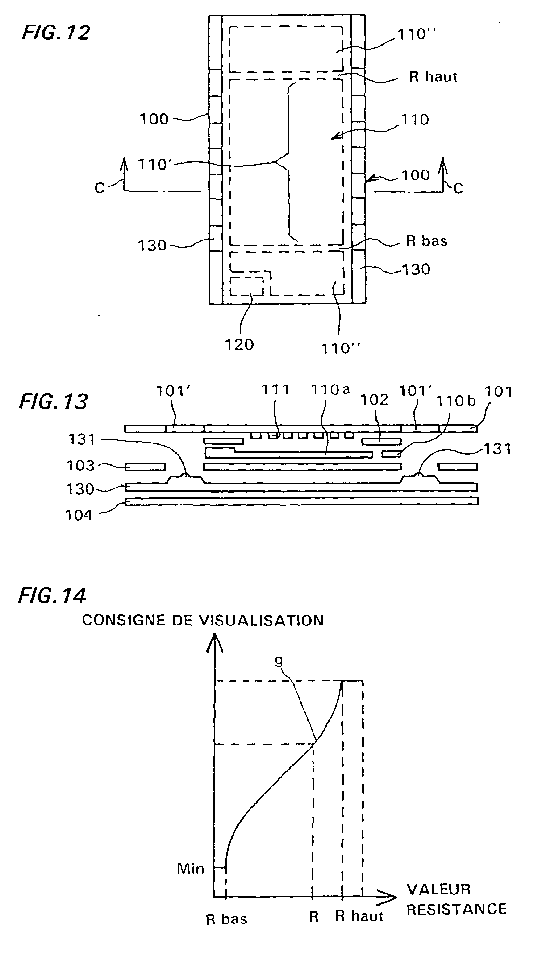

Un mode de réalisation préférentiel du module utilisateur 100 est représenté sur les figures 12 et 13.

Comme on peut le voir sur cette figure 12, le module utilisateur 100 comprend une région tactile 110 allongée constituant le clavier de commande du dispositif de commande, une touche d'arrêt 120 placée à proximité d'une extrémité de ladite région tactile 110, et des moyens de visualisation 130 de la position courante du volet qui s'étendent en ligne le long des deux côtés longitudinaux de ladite région tactile 110.

Cela permet une utilisation plus conviviale du module utilisateur par un gaucher qui, lors de l'actionnement du clavier, pourrait avec sa main masquer une partie des moyens de visualisation 130 situés du côté gauche de la région tactile 110.

Comme on peut le voir sur la figure 12, les moyens de visualisation 130 s'étendent à partir de la touche d'arrêt 120 jusqu'à l'extrémité opposée de la région tactile 110.

Ici, les moyens de visualisation comprennent une rangée de diodes 131 positionnées d'un côté ou des deux côtés longitudinaux de la région tactile, et espacées régulièrement le long de ladite région tactile.

On peut prévoir, dans une variante de réalisation non représentée, que les moyens de visualisation 130 comprennent au moins une rangée de bargraphes.

Le module utilisateur 100 comporte, comme le montre la vue en coupe représentée sur la figure 13, une face de décor 101 constituée par exemple par une membrane en matériau plastique souple qui recouvre un matériau sandwich comprenant des circuits imprimés et des entretoises en matériau isolant.

La face de décor 101, comporte, au niveau du positionnement des moyens de visualisation, des fenêtres 101' laissant passer la lumière produite par les diodes 131 placées en dessous de ladite face de décor. Cette face de décor 101 porte, à une extrémité et à l'autre extrémité opposées de ladite région tactile 110, une indication pour l'utilisateur du niveau limite haut respectivement bas pouvant être pris par le volet.

A ce sujet, il est prévu ici que la région tactile 110 constituant le clavier soit subdivisée en trois sous régions :

- une région haute 110" représentative de la fin de course haute à prendre par le volet, située au-dessus d'une valeur seuil R haut,
- une région basse 110" représentative de la fin de course basse à prendre par le volet, située en dessous d'une valeur seuil R bas, et
- une région intermédiaire 110' comprise entre les valeurs seuils R haut et R bas représentative d'une plage de positions intermédiaires à prendre par le volet, comprise entre les fins de courses haute et basse.

Pour plus de simplification, une diode électroluminescente est positionnée de part et d'autre de chacune des régions haute et basse de ladite région tactile 110.

Il est prévu sur chaque côté de la région tactile 110 seize diodes électroluminescentes 131 qui permettent de visualiser seize plages de niveaux différents à prendre par le volet.

Par ailleurs, la région tactile 110 est pourvue de moyens de reconnaissance d'une zone d'appui d'un doigt sur ladite région tactile correspondant à la sélection d'une position cible à prendre par le volet, lesdits moyens de reconnaissance étant reliés à l'unité de traitement par des moyens de liaison, ladite unité de traitement étant apte, à partir de la reconnaissance de ladite zone d'appui, à déterminer et à transmettre audit volet une consigne d'appareil pour qu'il prenne la position cible sélectionnée.

Plus particulièrement, les moyens de reconnaissance de ladite région tactile sont du type résistif.

Ils comprennent ici un circuit ouvert (voir plus particulièrement la figure 2), dont les bornes sont reliées à ladite unité de traitement, et formé de deux parties 110a, 110b en forme de peigne, dont les dos résistifs sont sensiblement parallèles et les dents conductrices sont enchevêtrées.

Ces parties 110a, 110b sont constituées ici par des pistes d'un circuit imprimé compris entre une entretoise inférieure 103 constituée par une membrane en matériau isolant et formant support du circuit imprimé et une entretoise supérieure 102 également en matériau isolant placée entre le circuit imprimé et la face de décor 101.

Les dos résistifs des parties en forme de peigne sont constitués par des pistes en matière carbonée parallèles et les dents conductrices enchevêtrées sont constituées par des pistes en matière métallique.

Le pas entre chaque dent conductrice des parties de circuit est ici de l'ordre de 1 mm.

La région tactile 110 est agencée de sorte que l'appui d'un doigt sur la zone tactile provoque la fermeture du circuit résistif 110a, 110b par la mise en contact d'au moins une dent d'une partie 110a avec une dent de l'autre partie 110b.

L'unité de traitement 200 (figure 5), comme cela sera explicité plus en détail ultérieurement, comprend d'une part des moyens de lecture 210 de la valeur de résistance existant entre les bornes du circuit fermé, cette valeur de résistance étant représentative de ladite zone d'appui, et d'autre part des moyens de détermination 220, à partir de ladite valeur de résistance lue, d'une consigne d'appareil à transmettre audit volet pour que ce dernier prenne la position cible sélectionnée correspondante.

La valeur de résistance lue est comprise entre une valeur minimale de l'ordre de 100 à 200 $\Omega$ et une valeur maximale supérieure ou égale à 10 k$\Omega$.

Comme cela sera également décrit ultérieurement, l'unité de traitement comprend également des moyens de détermination, à partir de la valeur de résistance lue, d'une consigne de visualisation à transmettre aux moyens de visualisation pour visualiser la position cible sélectionnée correspondante prise par le volet.

Pour fermer le circuit de résistance 110a, 110b lors de l'appui d'un doigt sur une zone de la région tactile, ladite région tactile 110 est pourvue de pistes (figure 13) en matière métalliques conductrices de courant 111 sensiblement parallèles, positionnées sur la face intérieure de la face de décor 101 du module utilisateur, de sorte qu'elles s'étendent généralement transversalement aux dents conductrices enchevêtrées des deux parties 110a, 110b du circuit, au-dessus de celles-ci, lesdits pistes conductrices étant destinées, lors de l'appui d'un doigt sur la région tactile, à venir au contact d'au moins une dent de chacune des parties du circuit pour le fermer au niveau de ladite zone d'appui.

La touche d'arrêt 120 est positionnée dans le module utilisateur 100 à proximité de l'extrémité de la région tactile 110 portant l'indication du niveau limite bas pouvant être pris par le volet.

Les diodes 131 des moyens de visualisation 130 sont positionnées de manière à être en contact électrique avec un circuit s'étendant entre l'entretoise 103 servant de support au circuit résistif 110 de ladite région tactile et un support inférieur 104 formant la face inférieure du module utilisateur et réalisé en matériau isolant, le circuit imprimé supportant les diodes permettant de faire la liaison électrique avec l'unité de traitement 200.

Par ailleurs, la touche d'arrêt 120 comprend un interrupteur (voir le schéma électrique de la figure 3) constitué par deux pistes conductrices de courant, non représentées sur les figures, une piste supérieure positionnée juste en dessous de la face de décor et une piste inférieure, espacées entre elles au moyen de l'entretoise isolante 102. La piste supérieure comporte une partie bombée déformable sous l'action d'un doigt en appui sur la face de décor du module utilisateur, pour venir au contact de la piste inférieure et fermer l'interrupteur relié par deux liaisons 120a, 120b à l'unité de traitement. Lors de la fermeture de l'interrupteur, l'unité de traitement est apte à transmettre au volet une consigne d'arrêt.

La région tactile constituant le clavier est, elle, ici, reliée par deux fils de liaison 110'a, 110'b à l'unité de traitement, et les moyens de visualisation comprennent quatre fils de liaison 233, 234, 235, 236 raccordés à l'unité de traitement commandé par matriçage.

Au sujet de la visualisation de la position courante du volet 300 commandé par le dispositif de commande décrit, l'unité de traitement comporte des moyens pour que les moyens de visualisation indiquent un changement de position du volet. Dans le cas où les moyens de visualisation sont constitués par au moins une rangée de diodes électroluminescentes, cela consiste, d'une part, à allumer et éteindre successivement les diodes au fur et à mesure que le volet change de position et, d'autre part, à allumer les diodes de la position cible.

On visualise comme cela, simultanément, la position cible à atteindre et la progression du volet entre sa position cible et sa position courante.

On peut également prévoir, dans le dispositif de commande, des moyens de balisage du clavier qui peuvent être mis en veille par rapport auxdits moyens de visualisation précités.

Sur la figure 5, on a représenté selon un schéma bloc, les principaux éléments de l'unité de traitement 200. Elle comprend en entrée une interface d'entrée 210 à laquelle sont reliés le clavier 110 et la touche d'arrêt 120, ici par des moyens de liaison distincts, comme cela a été décrit précédemment, c'est-à-dire par deux fils de liaison 110'a, 110'b pour le clavier 110 et par deux fils de liaison 120a, 120b pour la touche d'arrêt 120.

Ainsi, l'unité de traitement comprend des moyens pour surveiller de manière distincte l'actionnement du clavier et l'actionnement de la touche d'arrêt.

Cela peut être réalisé par tout autre moyen plus complexe que par des liaisons distinctes du clavier et de la touche d'arrêt à l'unité de traitement, par exemple par un système de multiplexage.

L'interface d'entrée 210 comporte notamment un moyen de lecture, tel qu'un ohmmètre, de la résistance existant entre les bornes du circuit résistif fermé constituant les moyens de reconnaissance de la zone d'appui de la région tactile du clavier, un convertisseur analogique/numérique pour convertir le signal analogique lu par les moyens de lecture en un signal numérique, et des moyens de correction et de filtrage de la valeur de résistance lue permettant de choisir une valeur de résistance correcte au cas où le mouvement du doigt de l'utilisateur sur la région tactile 110 n'est pas précis, par exemple lorsque l'utilisateur relâche lentement l'appui de son doigt sur la région tactile en créant des valeurs d'impédance intermédiaires.

Cette interface d'entrée 210 est reliée par un bus 211 à un microcontrôleur 220, par lequel elle va lui transmettre des données numériques.

Le microcontrôleur 220 est lui-même relié par un bus 221 à une interface de sortie 230 reliée d'une part au volet 300 par au moins deux liaisons 231, 232, pour lui fournir une consigne d'appareil déterminée par l'unité de traitement sous le contrôle du microcontrôleur 220, et d'autre part aux moyens de visualisation 130 par quatre fils de liaison 233 à 236, pour fournir aux moyens de liaison une consigne de visualisation déterminée par l'unité de traitement sous le contrôle du microcontrôleur 220.

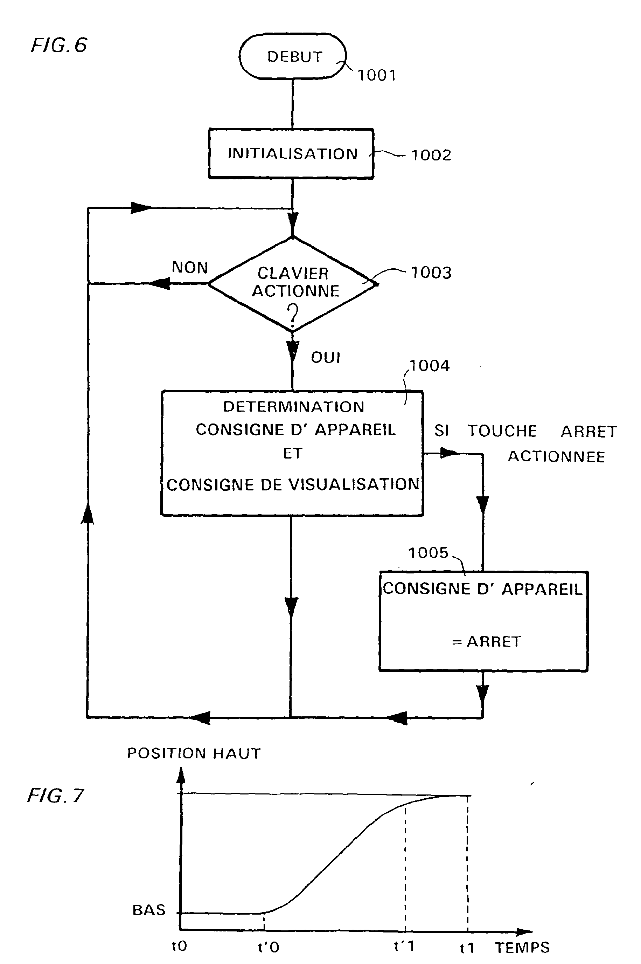

Sur la figure 6, on a représenté l'organigramme général d'un programme de fonctionnement du dispositif de commande selon l'invention, situé dans la mémoire 222 du microcontrôleur 220.

Préliminairement on notera que, pour plus de simplicité, le programme de fonctionnement du dispositif est décrit et représenté de manière séquentielle, mais il est bien entendu que celui-ci fonctionne en multi-tâches.

Selon l'organigramme représenté, le programme de fonctionnement dudit dispositif de commande comporte, lors de la mise sous tension 1001 du volet 300, et plus particulièrement du moteur d'entraînement du volet, une opération d'initialisation 1002, puis une opération de test 1003 au cours de laquelle on détermine si le clavier est ou non actionné. Il comprend, à la suite de l'opération de test 1003, une opération 1004 de détermination de la consigne d'appareil et de la consigne de visualisation qui est exécutée lorsque le clavier est actionné. La consigne d'appareil déterminée lors de l'opération 1004 est alors transmise via l'interface de sortie au volet 300, pour que celui-ci prenne le niveau cible sélectionné correspondant, et la consigne de visualisation est également transmise aux moyens de visualisation pour qu'ils affichent la plage du niveau cible atteint par le volet.

Si, au cours de l'opération de détermination de la consigne d'appareil et de la consigne de visualisation 1004, la touche d'arrêt est actionnée par l'utilisateur, il est alors prévu d'exécuter une étape 1005 pour donner à la consigne d'appareil la valeur arrêt.

Le microcontrôleur 220 comporte une zone de la mémoire 222 dans laquelle il mémorise les valeurs déterminées de la consigne d'appareil et de la consigne de visualisation.

Avantageusement, lorsque les niveaux cibles à prendre par le volet sont des positions intermédiaires comprises entre des niveaux limites haut et bas correspondant à des fins de courses haute et basse, le dispositif de commande fonctionne en "boucle ouverte", c'est-à-dire sans capteur de position du volet, l'unité de traitement 200 étant apte, à partir de l'actionnement du clavier 110, à déterminer et à transmettre au volet une consigne d'appareil qui est un ordre de montée ou de descente pendant un temps donné de sorte que ledit volet atteigne la position sélectionnée.

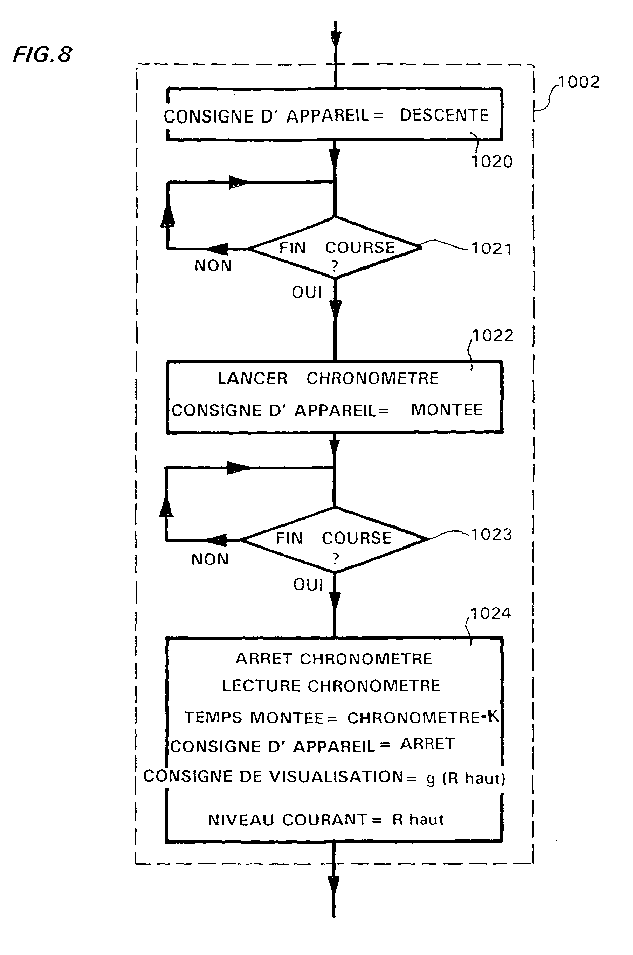

La détermination du temps de montée et de descente du volet est alors réalisée par l'unité de traitement à partir d'une opération d'initialisation 1002 qui va être décrite maintenant en référence à la figure 8.

Au cours de cette opération d'initialisation 1002, on fait descendre le volet roulant jusqu'à ce qu'il arrive en fin de course basse, ce qui correspond à l'exécution des étapes 1020 et 1021. A l'étape 1020 la consigne d'appareil est mise à la valeur "descente". L'étape 1021 est une étape de test de fin de course du volet. Lorsque la fin de course est atteinte, on exécute l'étape 1022 pour lancer un chronomètre et donner à la consigne d'appareil la valeur "montée" de façon à faire monter le volet roulant jusqu'en fin de course haute (étape de test 1023). Lorsque le volet arrive en fin de course haute, ce qui est testé à l'étape 1023, à l'étape 1024 on arrête le chronomètre, on lit le temps compté par le chronomètre et on détermine un temps de montée du volet.

A l'étape 1024 la consigne d'appareil est mise à la valeur "arrêt", la consigne de visualisation est mise à une valeur égale à "g (R haut)" (voir courbe de la figure 14) où R haut est la valeur de la résistance correspondant au niveau limite haut du volet, et le niveau courant du volet est mis à la valeur correspondant au niveau haut, c'est-à-dire ici à la valeur de résistance R égale à R haut.

Le temps de montée est déterminé à l'étape 1024 en fonction de la courbe représentée sur la figure 7. Cette courbe représente le temps effectif de montée du volet entre sa position limite basse (volet fermé) et sa position limite haute (volet ouvert). Comme on peut le voir sur la figure 7, cette courbe comporte une partie intermédiaire sensiblement linéaire et deux parties d'extrémité en palier. Le palier bas de la courbe est compris entre les valeurs de temps t0 et t'0, la valeur t'0 - t0 correspondant au temps de décollage du volet, le moteur d'entraînement du volet étant mis en rotation. Ce temps de décollage correspond à l'enroulement du surplus de longueur du volet, avant que celui-ci commence réellement à monter. Le palier haut de la courbe est compris entre les valeurs de temps t'1 et t1, la valeur t1 représentant le temps où le volet est complètement enroulé en position limite haute avec un contact fin de course de l'ensemble moteur à l'état ouvert, et la valeur t'1 représentant le temps où le volet arrive en butée haute de la glissière du volet. La valeur t1 - t'1 représente la durée d'enroulement des lames du volet autour de l'axe moteur.

En tenant compte de la courbe représentée sur la figure 7, le temps de montée déterminé à l'étape 1024 est égal à la différence entre le temps compté par le chronomètre entre son démarrage à l'étape 1022 et son arrêt à l'étape 1024, et une valeur constante K correspondant à la valeur (t'0 - t0) + (t1 - t'1).

Le temps de montée ainsi déterminé, la consigne d'appareil, la consigne de visualisation et le niveau courant du volet sont mémorisés dans la zone correspondante de la mémoire 222 du microcontrôleur 220.

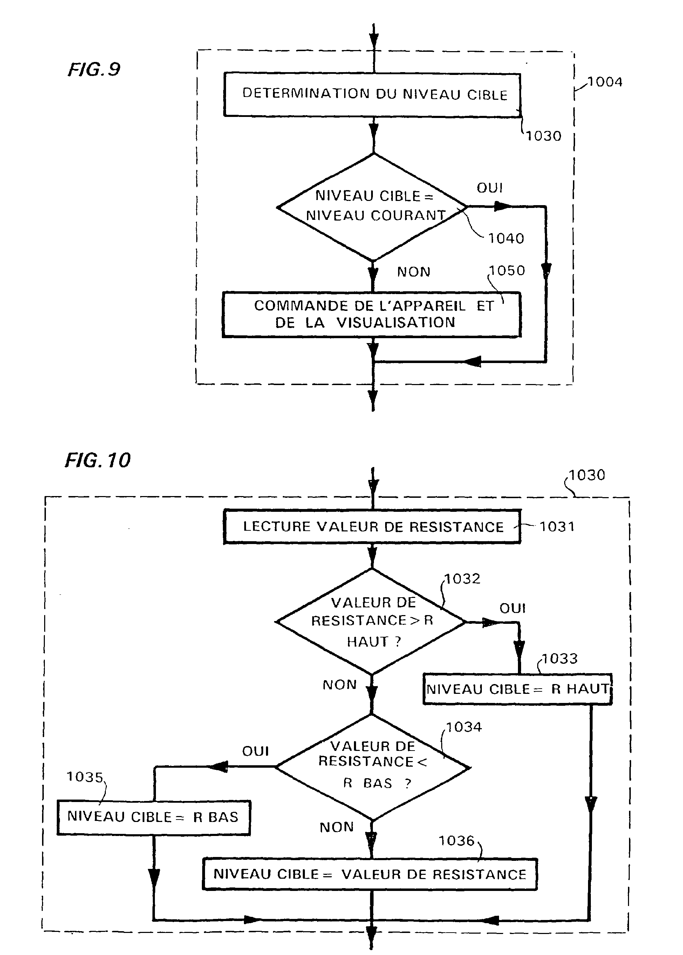

Lorsque le clavier est actionné, on exécute l'opération 1004 de détermination de la consigne d'appareil et de la consigne de visualisation, représentée sur la figure 9. Cette opération 1004 comprend une étape 1030 de détermination du niveau cible, une étape test 1040 de comparaison entre le niveau cible déterminé à l'étape 1030 et le niveau courant du volet, et une étape 1050 de détermination de la consigne d'appareil pour commander le volet et de détermination de la consigne de visualisation pour visualiser le mouvement du volet et la position cible qu'il doit atteindre. L'étape 1050 n'est exécutée que s'il est déterminé à l'étape 1040 que le niveau cible sélectionné est différent du niveau courant du volet.

L'étape 1030 de détermination du niveau cible va être décrite maintenant en référence à la figure 10.

Pour déterminer le niveau cible à prendre par le volet, sélectionné à partir de l'actionnement du clavier, on lit à l'étape 1031 la valeur de résistance de la résistance existant aux bornes du circuit résistif 110 fermé, puis au cours d'une étape de test 1032 on compare cette valeur de résistance lue à la valeur de résistance limite haute R haut correspondant à la position limite haute du volet. Si cette valeur de résistance est supérieure à la valeur R haut, alors à l'étape 1033 on attribue au niveau cible la valeur R haut. Si la valeur de résistance lue est inférieure au niveau R haut, on effectue alors une étape de test 1034 pour comparer cette valeur de résistance lue à la valeur R bas correspondant à la position limite basse du volet. Si la valeur de résistance lue est inférieure à R bas, alors à l'étape 1035 on attribue au niveau cible la valeur R bas, et si la valeur de résistance lue n'est pas inférieure à R bas, alors à l'étape 1036 on attribue au niveau cible la valeur de résistance lue.

Le niveau cible est une valeur mémorisée dans la zone correspondante de la mémoire 222 du microcontrôleur 220, et mise à jour à chaque actionnement du clavier.

Après l'étape 1030, on exécute l'étape test 1040 pour comparer le niveau cible déterminé au niveau courant du volet avant l'actionnement du clavier, et, si ce niveau cible est différent du niveau courant, on exécute l'étape 1050 de commande du volet et de la visualisation pour que le volet atteigne la position cible correspondante.

Bien entendu, si le niveau cible est égal au niveau courant du volet, aucune commande du volet et de la visualisation n'est réalisée, et le volet roulant reste en place avec la visualisation maintenue à ce niveau courant.

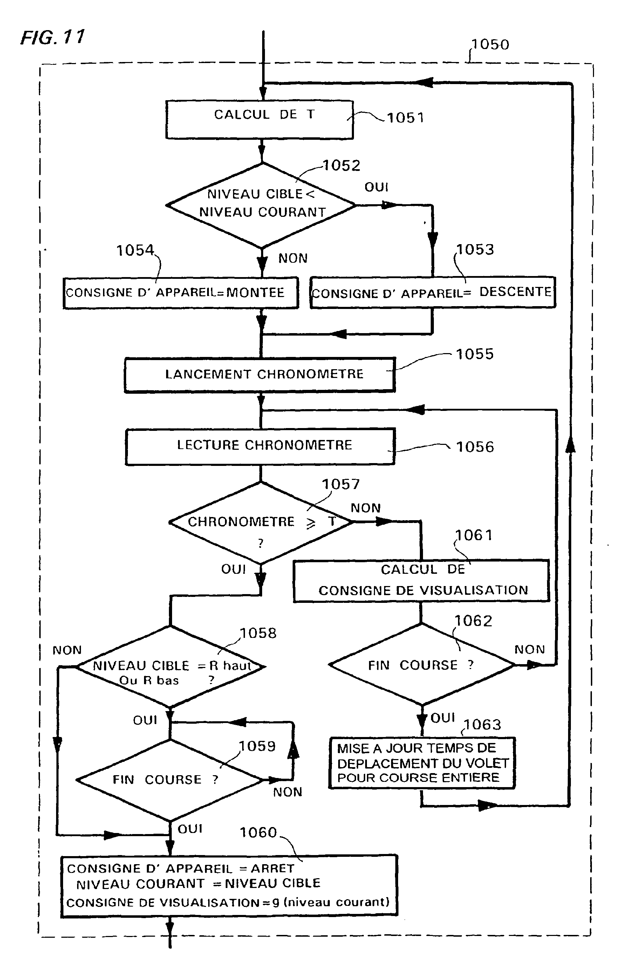

L'étape 1050 va maintenant être décrite dans le détail en référence à la figure 11.

Dans une première étape 1051, on détermine le temps de déplacement T du volet entre sa position courante (niveau courant) et la position cible (niveau cible) sélectionnée à partir du clavier.

Ce temps de déplacement T est déterminé selon la formule de calcul suivante :

$$T = (\,|\text{niveau cible - niveau courant}|/(R\ haut - R\ bas)) \times (\text{temps de montée})$$

où le temps de montée est déterminé lors de l'opération d'initialisation 1002 comme précédemment décrit, la valeur R haut est la valeur de résistance correspondant à la position limite haute du volet et la valeur R bas est la valeur de résistance correspondant à la position limite basse du volet.

Après avoir déterminé le temps de déplacement T à l'étape 1051, une étape de test 1052 est exécutée pour déterminer si le niveau cible est inférieur ou supérieur au niveau courant et en déduire le sens de déplacement du volet.

Si le niveau cible sélectionné à partir de l'actionnement du clavier est inférieur au niveau courant, alors l'ordre est donné au volet de monter, c'est-à-dire qu'à l'étape 1054 la consigne d'appareil est mise à la valeur "montée" et transmise par l'interface de sortie au volet. Cela revient à faire fonctionner le moteur d'entraînement du volet dans le sens de rotation de la montée. Si le niveau cible est inférieur au niveau courant, alors la consigne d'appareil transmise à l'étape 1053 par l'interface de sortie au volet est égale à la valeur "descente", ce qui revient à faire fonctionner le moteur d'entraînement du volet dans le sens de rotation de la descente.

Simultanément, on lance le chronomètre à l'étape 1055 de façon à faire monter ou descendre le volet pendant le temps de déplacement T déterminé à l'étape 1051. Au cours de la descente ou de la montée du volet, on lit le chronomètre lors d'une étape 1056 et on effectue une étape de test 1057 pour comparer la lecture du chronomètre au temps de déplacement T déterminé précédemment.

Si la lecture du chronomètre est inférieure au temps de déplacement T déterminé à l'étape 1051, on met à jour lors d'une étape 1061 la consigne de visualisation selon la formule de calcul suivante :

$$\text{consigne de visualisation} = (\text{chronomètre}/T) \times |\,g\,(\text{niveau cible}) - g\,(\text{niveau courant})\,|$$

de façon à ce que l'on allume et éteint successivement les diodes nécessaires entre le niveau courant et le niveau cible à atteindre par le volet, pour visualiser la progression du volet entre la position courante et la position cible sélectionnée.

Simultanément, les diodes correspondant à la position cible sont allumées.

La courbe "g" donnant la valeur de la consigne de visualisation en fonction du niveau cible est représentée sur la figure 14.

A la suite de l'étape de test 1057 où le chronomètre a atteint le temps de déplacement T déterminé à l'étape 1051, lors d'une étape 1060, la consigne d'appareil est mise à la valeur "arrêt" et est transmise au volet de façon à ce que le volet roulant s'arrête. A l'étape 1060, le niveau courant est mis à la valeur du niveau cible et la consigne de visualisation est mise à la valeur de g (niveau courant). L'ensemble de ces valeurs est mémorisé dans la zone correspondante de la mémoire 222 du microcontrôleur 220.

Comme le montre plus particulièrement l'organigramme représenté sur la figure 11, il est prévu une étape test 1058 pour amener directement le volet en position de fin de course haute et respectivement basse, lorsque la position cible sélectionnée par l'actionnement du clavier est supérieure ou égale respectivement inférieure ou égale à un seuil haut R haut, respectivement bas R bas du clavier.

En effet, lors de l'étape de test 1058, on détermine si le niveau cible sélectionné est égal à la valeur R haut ou R bas, et, si tel est le cas, on amène directement le volet dans la position respectivement haute ou basse, sans tenir compte du temps de déplacement du volet, ce qui est réalisé par l'exécution de l'étape de test de fin course 1059.

Si le niveau cible sélectionné est une position de fin de course haute ou basse, le dispositif détermine quand même un temps théorique de déplacement du volet, dont il ne tiendra pas compte pour amener le volet dans la position choisie. Mais il vérifiera que ce temps théorique correspond à la réalité, c'est-à-dire à un déplacement du volet depuis sa position courante jusqu'à sa position de fin de course sélectionnée. Si tel n'est pas le cas, alors on réalisera une mise à jour du temps de déplacement du volet pour une course entière.

Par ailleurs, si au cours de la montée ou de la descente du volet, le volet atteint une position de fin de course haute ou basse alors que le temps de déplacement T déterminé lors de l'étape 1051 n'est pas encore totalement écoulé, on réalise une mise à jour de la valeur du temps de déplacement du volet pour une course entière, c'est-à-dire entre les deux positions de fin de course haute et basse. Cela correspond à l'exécution de l'étape de test de fin de course 1062 et de l'opération de mise à jour 1063 si le test de fin de course est positif.

Dans une variante du procédé selon l'invention non représentée, on pourrait prévoir de substituer à l'étape de mise à jour 1063, une étape d'initialisation identique à celle effectuée lors de la mise sous tension du dispositif de commande.

Lorsqu'on arrive dans des positions de fin de course du volet haute ou basse, il se produit alors dans le sous-ensemble moteur une ouverture de contacts qui ouvre le circuit électrique de liaison le reliant à l'interface de sortie de l'unité de traitement, cette interface de sortie transmettant alors l'information au microcontrôleur pour que celui-ci envoie en retour une consigne d'appareil égale à la valeur "arrêt". Cette ouverture du circuit n'est pas matérialisée sur la figure 5, pour plus de clarté et du fait de son appartenance au sous-ensemble moteur.

Ce type de fonctionnement particulier précité, revient à un fonctionnement en boucle dite "fermée" dudit dispositif.

Le procédé de commande du volet roulant, positionné dans une position courante pour l'amener dans une position cible à l'aide du dispositif de commande décrit précédemment, comprend à partir de l'actionnement du clavier par un utilisateur les étapes suivantes :

a) déterminer la position cible sélectionnée par l'actionnement du clavier,
b) déterminer le temps de déplacement du volet entre sa position courante et la position cible,
c) déterminer le sens de déplacement, montée ou descente, du volet pour qu'il atteigne la position cible sélectionnée à partir de sa position courante,
d) faire monter ou descendre le volet pendant le temps déterminé à l'étape b) de sorte qu'il atteigne la position cible, et mémoriser la position cible en position courante du volet.

Lorsque la position cible sélectionnée par actionnement du clavier est supérieure ou égale respectivement inférieure ou égale à un seuil haut, respectivement bas du clavier, selon le procédé décrit, on amène directement le volet en fin de course haute respectivement basse et s'il y a lieu, on met à jour la valeur du temps de déplacement du volet pour une course entière, c'est-à-dire comprise entre les positions limites haute et basse.

Lorsqu'à l'étape d) le volet atteint une fin de course haute ou basse alors que le temps déterminé à l'étape b) n'est pas encore totalement écoulé, on réalise une opération de mise à jour du temps de déplacement du volet pour une course entière.

Le procédé de commande du volet à l'aide du dispositif de commande décrit précédemment fonctionne en boucle dite "ouverte", c'est-à-dire sans capteur de position du volet en déterminant le temps de déplacement du volet entre une position courante et une position cible sélectionnée, dans le cas où la résistance lue est comprise entre les valeurs R haut et R bas.

La présente invention n'est nullement limitée au mode de réalisation décrit et représenté, mais l'homme du métier pourra envisager toute variante conforme à son esprit.

En particulier, il pourra être envisagé, dans le cadre de l'invention, que le clavier comprenne dans une variante non représentée un bouton déplaçable commandant une résistance variable, le déplacement du bouton correspondant à la sélection d'un niveau cible à prendre par le volet, et une touche de mise en marche reliée par des moyens de liaison à l'unité de traitement et intégrée au bouton déplaçable, l'unité de traitement comportant d'une part des moyens de lecture de la valeur de résistance de la résistance variable lors de l'actionnement de la touche de mise en marche, la valeur de résistance étant représentative de la position du bouton, et d'autre part des moyens de détermination, à partir de ladite valeur de résistance lue, d'une consigne d'appareil à transmettre audit volet pour que ce dernier prenne la position cible sélectionnée correspondante.

De plus, il pourra être envisagé que le dispositif selon l'invention comprenne une installation externe reliée à ladite unité de traitement, cette installation externe étant apte à fournir une consigne de sélection d'une position cible dans ladite plage de positions prédéterminée à l'unité de traitement qui est apte à transmettre cette consigne audit volet pour lui faire prendre la position cible sélectionnée si elle est différente de sa position courante.

Dans ce cas, l'unité de traitement comprend des moyens de gestion des priorités entre les informations qu'elle reçoit du clavier actionné et de l'installation externe, pour que l'information provenant de l'actionnement du clavier soit prioritaire sur l'information provenant de ladite installation externe.

La présente invention ne s'applique évidemment pas uniquement à la commande d'un volet roulant mais aussi par exemple à la commande de stores ou de tout autre dispositif commandé graduellement en position.

Avantageusement, l'installation externe est une centrale météorologique ou une cellule de luminosité. Le dispositif objet de la présente invention peut aussi être utilisé pour la commande centralisée de plusieurs volets roulants.

## Revendications

1. Procédé de commande d'un volet roulant positionné dans une position courante pour l'amener dans une position cible sans capteur de position du volet, ledit volet étant adapté à prendre différentes positions dans une plage de positions comprises entre des fins de courses haute et basse, à partir de l'actionnement d'un clavier (1003), le procédé comprenant les étapes suivantes :

   a) déterminer la position cible (1030) sélectionnée par actionnement du clavier,
   b) déterminer le temps de déplacement (1051) du volet entre sa position courante et la position cible,
   c) déterminer le sens de déplacement (1052), montée ou descente, du volet pour qu'il atteigne la position cible sélectionnée à partir de sa position courante,
   d) faire monter ou descendre le volet (1053, 1054), pendant le temps déterminé à l'étape b) de sorte que le volet atteigne la position cible,
   e) mémoriser la position cible en position courante du volet (1060) ;

   **caractérisé en ce que** lorsque la position cible sélectionnée par actionnement du clavier est supérieure ou égale, respectivement inférieure ou égale, à un seuil haut (R haut), respectivement bas (R bas), on réalise une étape (1058, 1059) où on amène directement le volet en fin de course haute respectivement basse sans tenir compte du temps de déplacement du volet.

2. Procédé selon la revendication 1, **caractérisé en ce qu'**il comprend une opération d'initialisation (1002) effectuée lors de la mise sous tension du volet, qui comprend les étapes consistant à :

   1) amener le volet (1020) jusqu'à une fin de course,
   2) lancer un chronomètre (1022),
   3) amener le volet (1023) jusqu'à la fin de course opposée,
   4) arrêter le chronomètre et lire la valeur du temps compté par le chronomètre (1024), et
   5) mémoriser (1024) ladite valeur du temps compté par le chronomètre comme étant le temps de déplacement du volet pour une course entière.

3. Procédé selon la revendication 2, **caractérisé en ce que** lors de l'opération d'initialisation (1002), à l'étape 1) on fait descendre le volet jusqu'en fin de course basse, à l'étape 3) on fait monter le volet jusqu'en fin de course haute, et à l'étape 5) le temps de déplacement du volet pour une course entière est un temps de montée.

**4.** Procédé selon l'une des revendications 2 ou 3, **caractérisé en ce que**, lors de l'opération d'initialisation (1002), on initialise une consigne de visualisation de sorte que l'on visualise la fin de course haute du volet.

**5.** Procédé selon l'une des revendications 2 à 4, **caractérisé en ce que**, lorsqu'à l'étape d) le volet atteint une fin de course haute ou basse alors que le temps déterminé à l'étape b) n'est pas encore totalement écoulé, on réalise une opération de mise à jour du temps de déplacement du volet pour une course entière (1063).

**6.** Procédé selon l'une des revendications 1 à 5, **caractérisé en ce qu'**à l'étape a) on lit une valeur de résistance existant aux bornes d'un circuit résistif du clavier, et à l'étape b) on détermine le temps de déplacement du volet en fonction du temps de déplacement du volet pour une course entière, de la différence des valeurs de résistance correspondant à la position courante et à la position cible et de la différence des valeurs de résistance (R haut, R bas) correspondant aux fins de courses haute et basse.

**7.** Procédé selon l'une des revendications 4 à 6, **caractérisé en ce qu'**à partir de l'opération d'initialisation on visualise (1061), par allumage et extinction successifs de moyens de visualisation, le déplacement du volet entre sa position courante et la position cible.

**8.** Procédé selon la revendication 7, **caractérisé en ce qu'**on visualise simultanément la position cible et le déplacement du volet entre sa position courante et sa position cible.

**9.** Procédé selon l'une des revendications 7 ou 8, **caractérisé en ce qu'**entre deux actionnements du clavier, on visualise (1060) la position courante du volet.

**10.** Dispositif de commande pour la mise en oeuvre du procédé selon l'une quelconque des revendications 1 à 9, comportant :

- un clavier (110) représentatif de ladite plage de positions pour permettre à un utilisateur de sélectionner une position cible, et
- une unité de traitement (200) apte, à partir de l'actionnement du clavier, à déterminer et à transmettre au volet une consigne d'appareil qui est un ordre de montée ou de descente, pendant un temps donné, de sorte que ledit volet atteigne la position cible sélectionnée ;

**caractérisé en ce que** l'unité de traitement comprend des moyens pour amener directement le volet en fin de course haute respectivement basse lorsqu'une position cible est sélectionnée par actionnement du clavier au-dessus respectivement en dessous d'un seuil haut (R haut) respectivement bas (R bas) déterminé.

**11.** Dispositif selon la revendication 10, **caractérisé en ce que** la détermination du temps de montée ou de descente du volet est réalisée par l'unité de traitement à partir d'une opération d'initialisation (1002) au cours de laquelle l'unité de traitement fait faire au volet un trajet entre les fins de courses haute et basse, mesure le temps que met le volet à parcourir ledit trajet, et mémorise le temps mesuré.

**12.** Dispositif selon l'une des revendications 10 ou 11, **caractérisé en ce que** l'unité de traitement comprend des moyens pour, d'une part, mémoriser la position courante du volet et, d'autre part, lorsqu'une position cible du volet est sélectionnée par actionnement du clavier, déterminer et transmettre audit volet la consigne d'appareil pendant un temps donné pour qu'il atteigne, à partir de sa position courante, la position cible sélectionnée.

**13.** Dispositif selon l'une des revendications 10 à 12, **caractérisé en ce que** l'unité de traitement comprend des moyens pour réaliser une opération de mise à jour du temps de déplacement du volet pour une course entière, lorsque le volet arrive en fin de course haute respectivement basse alors que le temps de montée respectivement de descente déterminé par ladite unité de traitement n'est pas encore totalement écoulé.

**14.** Dispositif selon l'une quelconque des revendications 10 à 13, **caractérisé en ce que** le clavier (110) comprend au moins une région tactile pourvue de moyens de reconnaissance d'une zone d'appui d'un doigt sur ladite région tactile correspondant à la sélection d'une position cible à prendre par le volet, lesdits moyens de reconnaissance étant reliés à l'unité de traitement qui est apte, à partir de la reconnaissance de ladite zone d'appui, à déterminer et à transmettre audit volet la consigne d'appareil pour qu'il prenne la position cible sélectionnée.

**15.** Dispositif selon la revendication 14, **caractérisé en ce que** la région tactile (110) comprend trois sous régions dont :

- une région haute (110") représentative de la fin de course haute à prendre par le volet,
- une région basse (110") représentative de la fin de course basse à prendre par le volet, et
- une région intermédiaire (110') comprise entre les régions haute et basse, représentative d'une plage de positions intermédiaires à prendre par le volet, comprise entre les fins de courses haute et basse.

**16.** Dispositif selon l'une des revendications 14 ou 15, **caractérisé en ce que** lesdits moyens de reconnaissance de ladite région tactile sont du type résistif.

**17.** Dispositif selon la revendication 16, **caractérisé en ce que** lesdits moyens de reconnaissance comprennent un circuit ouvert dont les bornes sont reliées à ladite unité de traitement, et formé de deux parties (110a, 110b) en forme de peigne, dont les dos résistifs sont sensiblement parallèles et les dents conductrices sont enchevêtrées, ladite région tactile étant agencée de sorte que l'appui d'un doigt sur une zone de la région tactile provoque la fermeture dudit circuit par la mise en contact d'au moins une dent d'une partie (110a) avec au moins une dent de l'autre partie (110b), ladite unité de traitement comprenant d'une part des moyens de lecture (210) de la valeur de résistance existant entre les bornes dudit circuit fermé, cette valeur de résistance étant représentative de ladite zone d'appui, et d'autre part des moyens de détermination (220), à partir de ladite valeur de résistance lue, d'une consigne d'appareil à transmettre audit volet pour que ce dernier prenne la position cible sélectionnée correspondante.

**18.** Dispositif selon la revendication 17, **caractérisé en ce que** ladite région tactile est pourvue de pistes conductrices de courant (111) sensiblement parallèles, s'étendant généralement transversalement aux dents enchevêtrées des deux parties (110a, 110b) dudit circuit, au-dessus de celles-ci, lesdites pistes conductrices étant destinées, lors de l'appui d'un doigt sur la région tactile, à venir au contact d'au moins une dent de chacune des parties dudit circuit pour le fermer au niveau de ladite zone d'appui.

**19.** Dispositif selon l'une quelconques des revendications 10 à 13, **caractérisé en ce que** le clavier comprend un bouton déplaçable commandant une résistance variable, le déplacement du bouton correspondant à la sélection d'une position cible à prendre par le volet, et une touche de mise en marche reliée à l'unité de traitement et intégrée au bouton déplaçable, ladite unité de traitement comportant d'une part des moyens de lecture de la valeur de résistance de la résistance variable lors de l'actionnement de ladite touche de mise en marche, ladite valeur de résistance étant représentative de la position dudit bouton, et d'autre part des moyens de détermination, à partir de ladite valeur de résistance lue, d'une consigne d'appareil à transmettre audit volet pour que ce dernier prenne la position cible sélectionnée correspondante.

**20.** Dispositif selon l'une des revendications 10 à 19, **caractérisé en ce qu'**il comprend des moyens de visualisation (130), de la position courante du volet (300), reliés à ladite unité de traitement (200).

**21.** Dispositif selon la revendication 20, **caractérisé en ce que** ladite unité de traitement (200) est apte à mettre en état de veille lesdits moyens de visualisation après l'arrêt du volet.

**22.** Dispositif selon la revendication 21, **caractérisé en ce que** la mise en état de veille desdits moyens de visualisation (130) consiste à réduire l'intensité lumineuse desdits moyens de visualisation.

**23.** Dispositif selon l'une des revendications 20 à 22, **caractérisé en ce qu'**il comporte des moyens de visualisation du changement de position du volet.

**24.** Dispositif selon la revendication 23, **caractérisé en ce qu'**il comporte des moyens de visualisation de la position cible et simultanément du changement de la position du volet.

**25.** Dispositif selon l'une des revendications 10 à 24, **caractérisé en ce qu'**il comporte des moyens de balisage dudit clavier.

**26.** Dispositif selon l'une des revendications 20 à 25, **caractérisé en ce que** ladite unité de traitement (200) comprend des moyens de détermination (220), à partir de ladite valeur de résistance lue, d'une consigne de visualisation, et des moyens de transmission de cette consigne de visualisation auxdits moyens de visualisation pour visualiser la position cible sélectionnée à prendre par ledit volet.

**27.** Dispositif selon l'une des revendications 20 à 26, **caractérisé en ce que** les moyens de visualisation (130) com-

**EP 1 111 486 B1**

prennent au moins une rangée de diodes électroluminescentes (131) positionnée en regard dudit clavier (110).

28. Dispositif selon l'une des revendications 20 à 26, **caractérisé en ce que** les moyens de visualisation comprennent au moins une rangée de bargraphes.

29. Dispositif selon l'une des revendications 10 à 28, **caractérisé en ce que** l'unité de traitement (200) comprend :

   - une interface d'entrée (210) reliée audit clavier,
   - une interface de sortie (230) reliée audit volet (300), et
   - un microcontrôleur (220) relié à l'interface d'entrée (210) et à l'interface de sortie (230),

l'interface de sortie fournissant au volet (300) la consigne d'appareil déterminée sous le contrôle du microcontrôleur (220).

30. Dispositif selon l'une des revendications 10 à 29, **caractérisé en ce qu'**il comporte en outre une touche d'arrêt (120) dudit volet (300) reliée à ladite unité de traitement (200) qui est apte à :

   - dans le cas où volet (300) est à l'arrêt et la touche d'arrêt est actionnée, maintenir le volet à l'arrêt, et
   - dans le cas où le volet (300) est en fonctionnement et que la touche d'arrêt est actionnée, arrêter ledit volet.

31. Dispositif selon la revendication 30, **caractérisé en ce que** l'unité de traitement (200) comprend des moyens pour surveiller de manière distincte l'actionnement du clavier (110) et l'actionnement de la touche d'arrêt (120).

32. Dispositif selon l'une des revendications 10 à 31, **caractérisé en ce qu'**il comprend une installation externe reliée à ladite unité de traitement, cette installation externe étant apte à fournir une consigne de sélection d'une position cible dans ladite plage de positions prédéterminée, à l'unité de traitement qui est apte à transmettre cette consigne audit volet pour lui faire prendre la position cible sélectionnée si elle est différente de sa position courante.

33. Dispositif selon la revendication 32, **caractérisé en ce que** l'unité de traitement comprend des moyens de gestion des priorités entre les informations qu'elle reçoit du clavier actionné et de l'installation externe, pour que l'information provenant de l'actionnement du clavier soit prioritaire sur l'information provenant de ladite installation externe.

34. Dispositif selon l'une des revendications 32 ou 33, **caractérisé en ce que** l'installation externe est une centrale météorologique.

**Claims**

1. Method of controlling a roller blind positioned in a current position in order to bring it into a target position without a blind position sensor, said blind being capable of adopting different positions within a range of positions between upper and lower stops, based on the actuation of a keypad (1003), the method comprising the following steps:

   a) determining the target position (1030) selected by actuation of the keypad,
   b) determining the movement time (1051) of the blind between its current position and the target position,
   c) determining the direction of movement (1052), upward or downward, of the blind in order for it to reach the selected target position from its current position,
   d) raising or lowering the blind (1053, 1054), for the time determined in step b) so that the blind reaches the target position,
   e) storing the target position as the current position of the blind (1060);

   **characterized in that** when the target position selected by actuation of the keypad is greater than or equal to, respectively less than or equal to, an upper threshold (R upper), respectively a lower threshold (R lower), a step (1058, 1059) is carried out in which the blind is brought directly to the upper, respectively the lower, stop without taking account of the movement time of the blind.

2. Method according to claim 1, **characterized in that** it comprises an initialization operation (1002) carried out when the blind is powered-up, comprising the steps consisting of:

**12**

1) bringing the blind (1020) to one stop,
2) starting a timing device (1022),
3) bringing the blind (1023) to the opposite stop,
4) stopping the timing device and reading the value of the time counted by the timing device (1024), and
5) storing (1024) said value of the time counted by the timing device as the movement time of the blind for an entire run.

3.  Method according to claim 2, **characterized in that** during the initialization operation (1002), in step 1) the blind is lowered to the lower stop, in step 3) the blind is raised to an upper stop, and in step 5) the movement time of the blind for an entire run is a raising time.

4.  Method according to one of claims 2 or 3, **characterized in that**, during the initialization operation (1002), a display instruction is initialized so that the upper stop of the blind can be displayed.

5.  Method according to one of claims 2 to 4, **characterized in that**, when in step d) the blind reaches an upper or lower stop when the time determined in step b) has not yet fully elapsed, an operation is carried out to update the movement time of the blind for an entire run (1063).

6.  Method according to one of claims 1 to 5, **characterized in that** in step a) a resistance value existing at the terminals of a resistive circuit of the keypad is read, and in step b) the movement time of the blind is determined as a function of the movement time of the blind for an entire run, from the difference between the resistance values corresponding to the current position and the target position and the difference between the resistance values (R upper, R lower) corresponding to the upper and lower stops.

7.  Method according to one of claims 4 to 6, **characterized in that**, starting from the initialization operation, the movement of the blind between its current position and the target position is displayed (1061) by successive switching on and off of display means.

8.  Method according to claim 7, **characterized in that** the target position and the movement of the blind between its current position and its target position are simultaneously displayed.

9.  Method according to one of claims 7 or 8, **characterized in that** between two actuations of the keypad, the current position of the blind is displayed (1060).

10. Control device for implementing the method according to any one of claims 1 to 9, comprising:

    - a keypad (110) representing said range of positions in order to allow a user to select a target position, and
    - a processor unit (200) capable, based on the actuation of the keypad, of determining and transmitting to the blind a device instruction which is an order to raise or lower for a given time, so that said blind reaches the selected target position;

    **characterized in that** the processor unit comprises means of bringing the blind directly to an upper, respectively lower, stop when a target position is selected by actuation of the keypad respectively above, below a determined upper (R upper) respectively lower (R lower) threshold.

11. Device according to claim 10, **characterized in that** the raising or lowering time of the blind is determined by the processor unit based on an initialization operation (1002) during which the processor unit causes the blind to run between the upper and lower stops, measures the time that the blind takes to complete this run, and stores the measured time.

12. Device according to one of claims 10 or 11, **characterized in that** the processor unit comprises of means of, on the one hand, storing the current position of the blind and on the other hand, when a target position of the blind is selected by actuation of the keypad, determining and transmitting the device instruction to said blind for a given time so that it reaches the selected target position from its current position.

13. Device according to one of claims 10 to 12, **characterized in that** the processor unit comprises means of carrying out an operation of updating the movement time of the blind for an entire run, when the blind arrives at the upper, respectively lower stop when the raising, respectively lowering time determined by said processor unit has not yet fully elapsed.

**14.** Device according to any one of claims 10 to 13, **characterized in that** the keypad (110) comprises at least one touch-sensitive area provided with means of recognition of a finger pressure zone on said touch-sensitive area corresponding to the selection of a target position to be adopted by the blind, said recognition means being linked to the processor unit which is capable, based on the recognition of said pressure zone, of determining and transmitting the device instruction to said blind in order for it to adopt the selected target position.

**15.** Device according to claim 14, **characterized in that** the touch-sensitive area (110) comprises three sub-areas of which:

- an upper area (110") represents the upper stop to be adopted by the blind,
- a lower area (110") represents the lower stop to be adopted by the blind, and
- an intermediate area (110') between the upper and lower areas, represents a range of intermediate positions to be adopted by the blind, between the upper and lower stops.

**16.** Device according to one of claims 14 or 15, **characterized in that** said recognition means of said touch-sensitive area are of the resistive type.

**17.** Device according to claim 16, **characterized in that** said recognition means comprise an open circuit, the terminals of which are linked to said processor unit, and formed of two parts (110a, 110b) in the form of a comb, of which the resistive backs are substantially parallel and the conductive teeth are interleaved, said touch-sensitive area being arranged so that finger pressure on a zone of the touch-sensitive area causes said circuit to be closed by contact between at least one tooth of one part (110a) and at least one tooth of the other part (110b), said processor unit comprising on the one hand means of reading (210) the resistance value existing between the terminals of said closed circuit, this resistance value representing said pressure zone, and on the other hand means of determining (220), from said read resistance value, a device instruction to be transmitted to said blind so that it adopts the corresponding selected target position.

**18.** Device according to claim 17, **characterized in that** said touch-sensitive area is provided with substantially parallel current conductors (111), extending generally transversally to the interleaved teeth of the two parts (110a, 110b) of said circuit and above them, said conductors being intended, when a finger presses on the touch-sensitive area, to come into contact with at least one tooth of each of the parts of said circuit in order to close it at said pressure zone.

**19.** Device according to any one of claims 10 to 13, **characterized in that** the keypad comprises a moveable button controlling a variable resistor, the movement of the button corresponding to the selection of a target position to be adopted by the blind, and a power key linked to the processor unit and incorporated into the moveable button, said processor unit comprising on the one hand, means of reading the resistance value of the variable resistor during the actuation of said power key, said resistance value representing the position of said button, and on the other hand means of determining, from said read resistance value, a device instruction to be transmitted to said blind so that it adopts the corresponding selected target position.

**20.** Device according to one of claims 10 to 19, **characterized in that** it comprises means (130) of displaying the current position of the blind (300), linked to said processor unit (200).

**21.** Device according to claim 20, **characterized in that** said processor unit (200) is capable of putting said display means into standby mode after the blind has stopped.

**22.** Device according to claim 21, **characterized in that** the standby mode of said display means (130) consists of reducing the light intensity of said display means.

**23.** Device according to one of claims 20 to 22, **characterized in that** it comprises means of displaying the change of position of the blind.

**24.** Device according to claims 23, **characterized in that** it comprises means of displaying the target position and simultaneously the change of position of the blind.

**25.** Device according to one of claims 10 to 24, **characterized in that** it comprises means of lighting said keypad.

26. Device according to one of claims 20 to 25, **characterized in that** said processor unit (200) comprises means of determining (220), based on said read resistance value, a display instruction, and means of transmitting this display instruction to said display means, in order to display the selected target position to be adopted by said blind.

27. Device according to one of claims 20 to 26, **characterized in that** the display means (130) comprise at least one row of light-emitting diodes (131) positioned opposite said keypad (110).

28. Device according to one of claims 20 to 26, **characterized in that** the display means comprise at least one row of bargraphs.

29. Device according to one of claim 10 to 28, **characterized in that** the processor unit (200) comprises:

   - an input interface (210) linked to said keypad,
   - an output interface (230) linked to said blind (300), and
   - a microcontroller (220) linked to the input interface (210) and to the output interface (230),

   the output interface providing the blind (300) with the device instruction determined under the control of the microcontroller (220).

30. Device according to one of claims 10 to 29, **characterized in that** it also includes a stop key (120) of said blind (300) linked to said processor unit (200) that is capable of:

   - if the blind (300) is idle and the stop key is actuated, keeping the blind stopped, and
   - if the blind (300) is in operation and the stop key is actuated, stopping said blind.

31. Device according to claim 30, **characterized in that** the processor unit (200) comprises means of monitoring separately the actuation of the keypad (110) and the actuation of the stop key (120).

32. Device according to one of claims 10 to 31, **characterized in that** it comprises an external installation linked to said processor unit, this external installation being capable of providing an instruction for the selection of a target position within said predetermined range of positions to the processor unit, which is capable of transmitting this instruction to said blind in order to cause it to adopt the selected target position if it is different from its current position.

33. Device according to claim 32, **characterized in that** the processor unit comprises means of managing priorities among the information that it receives from the actuated keypad and from the external installation, so that the information originating from actuation of the keypad takes priority over the information originating from said external installation.

34. Device according to one of claims 32 or 33, **characterized in that** the external installation is a meteorological station.

**Patentansprüche**

1. Verfahren zur Steuerung eins Rollladens, der in einer gegenwärtigen Position positioniert ist, um ihn ohne Rollladenpositionssensor in eine Zielposition zu bringen, wobei der Rollladen durch Betätigung einer Tastatur (1003) verschiedene zwischen einer oberen und einer unteren Endstellung gelegene Positionen in einem Positionsbereich einzunehmen vermag, wobei das Verfahren die folgenden Schritte umfasst:

   a) Bestimmen der Zielposition (1030), ausgewählt durch Betätigung der Tastatur,
   b) Bestimmen der Zeit (1051) zum Verstellen des Rollladens zwischen seiner gegenwärtigen Position und der Zielposition,
   c) Bestimmen der Verstellrichtung (1052), aufwärts oder abwärts, des Rollladens, damit dieser die gewählte Zielposition von seiner gegenwärtigen Position aus erreicht,
   d) Hochziehen oder Herablassen des Rollladens (1053, 1054) während des in Schritt b) bestimmten Zeitraums, damit der Rollladen die Zielposition erreicht,
   e) Speichern der Zielposition als gegenwärtige Position des Rollladens (1060); **dadurch gekennzeichnet, dass** ein Schritt (1058, 1059) ausgeführt wird, bei dem der Rollladen ohne Berücksichtigung der Rollladenverstellzeit direkt in die obere bzw. die untere Endstellung gebracht wird, wenn die durch Betätigung der Tastatur gewählte Zielposition größer gleich bzw. kleiner gleich einem oberen (R oben) bzw. unteren (R unten) Grenzwert ist.

2. Verfahren nach Anspruch 1,
**dadurch gekennzeichnet, dass** es einen beim Anschließen des Rollladens durchgeführten Initialisierungsvorgang (1002) aufweist, der die folgenden Schritte umfasst:

1) Führen des Rollladens (1020) bis in eine Endstellung,
2) Starten eines Zeitmessers (1022),
3) Führen des Rollladens (1023) bis in die entgegengesetzte Endstellung,
4) Stoppen des Zeitmessers und Ablesen des Wertes der durch den Zeitmesser (1024) ermittelten Zeit, und
5) Speichern (1024) des durch den Zeitmesser ermittelten Zeitwertes als die Rollladenverstellzeit für eine gesamte Weglänge.

3. Verfahren nach Anspruch 2,
**dadurch gekennzeichnet, dass** bei dem Initialisierungsvorgang (1002) in Schritt 1) der Rollladen bis in die untere Endstellung herabgelassen wird, in Schritt 3) der Rollladen bis in die obere Endstellung hochgezogen wird und in Schritt 5) die Rollladenverstellzeit für eine gesamte Weglänge eine Aufwärtszeit ist.

4. Verfahren nach einem der Ansprüche 2 oder 3,
**dadurch gekennzeichnet, dass** bei dem Initialisierungsvorgang (1002) ein Anzeigesollwert initialisiert wird, damit die obere Endstellung des Rollladens angezeigt wird.

5. Verfahren nach einem der Ansprüche 2 bis 4,
**dadurch gekennzeichnet, dass** bei Erreichen einer oberen oder unteren Endstellung durch den Rollladen in Schritt d), obgleich die in Schritt b) bestimmte Zeit noch nicht vollständig abgelaufen ist, die Rollladenverstellzeit für eine gesamte Weglänge (1063) aktualisiert wird.

6. Verfahren nach einem der Ansprüche 1 bis 5,
**dadurch gekennzeichnet, dass** in Schritt a) ein an den Klemmen eines Widerstandskreises der Tastatur vorhandener Widerstandswert gelesen wird, und in Schritt b) die Rollladenverstellzeit in Abhängigkeit von der Rollladenverstellzeit für eine gesamte Weglänge aus dem Unterschied der Widerstandswerte, die der gegenwärtigen Position und der Zielposition entsprechen, und aus dem Unterschied der Widerstandswerte (R oben, R unten), die der oberen und unteren Endstellung entsprechen, bestimmt wird.

7. Verfahren nach einem der Ansprüche 4 bis 6,
**dadurch gekennzeichnet, dass** mithilfe des Initialisierungsvorgangs (1061) durch aufeinanderfolgendes Ein- und Ausblenden von Anzeigemitteln das Verstellen des Rollladens zwischen seiner gegenwärtigen Position und der Zielposition angezeigt (1061) wird.

8. Verfahren nach Anspruch 7,
**dadurch gekennzeichnet, dass** gleichzeitig die Zielposition und das Verstellen des Rollladens zwischen seiner gegenwärtigen Position und seiner Zielposition angezeigt werden.

9. Verfahren nach einem der Ansprüche 7 oder 8,
**dadurch gekennzeichnet, dass** die gegenwärtige Position des Rollladen zwischen zwei Betätigungen der Tastatur angezeigt wird (1060).

10. Steuervorrichtung zur Durchführung des Verfahrens nach einem der Ansprüche 1 bis 9, umfassend:

- eine für den Positionsbereich repräsentative Tastatur (110), um einem Benutzer die Auswahl einer Zielposition zu ermöglichen, und
- eine Verarbeitungseinheit (200), die durch Betätigung der Tastatur einen Gerätesollwert, bei dem es sich um einen Aufwärts- oder Abwärts-Befehl handelt, zu bestimmen und an den Rollladen während einer gegebenen Zeit zu übermitteln vermag, so dass der Rollladen die gewählte Zielposition erreicht,

**dadurch gekennzeichnet, dass** die Verarbeitungseinheit Mittel umfasst, um den Rollladen direkt in die obere bzw. untere Endstellung zu bringen, wenn durch Betätigung der Tastatur eine Zielposition oberhalb bzw. unterhalb eines bestimmten oberen (R oben) bzw. unteren (R unten) Grenzwertes ausgewählt ist.

**11.** Vorrichtung nach Anspruch 10,
**dadurch gekennzeichnet, dass** die Bestimmung der Aufwärts- oder Abwärtszeit des Rollladens durch die Verarbeitungseinheit mittels eines Initialisierungsvorgangs (1002) ausgeführt wird, in dessen Verlauf die Verarbeitungseinheit den Rollladen eine Wegstrecke zwischen der oberen und der unteren Endstellung zurücklegen lässt, die Zeit misst, die der Rollladen zum Zurücklegen dieser Wegstrecke benötigt, und die gemessene Zeit speichert.

**12.** Vorrichtung nach einem der Ansprüche 10 oder 11,
**dadurch gekennzeichnet, dass** die Verarbeitungseinheit Mittel umfasst, um einerseits die gegenwärtige Position des Rollladens zu speichern und andererseits, wenn eine Zielposition des Rollladens durch Betätigung der Tastatur ausgewählt ist, die Gerätesollwert zu bestimmen und an den Rollladen während einer gegebenen Zeit zu übermitteln, damit dieser von seiner gegenwärtigen Position aus die gewählte Zielposition erreicht.

**13.** Vorrichtung nach einem der Ansprüche 10 bis 12,
**dadurch gekennzeichnet, dass** die Verarbeitungseinhit Mittel umfasst, um eine Aktualisierung der Rollladenverstellzeit für eine gesamte Weglänge durchzuführen, wenn der Rollladen an der oberen bzw. der unteren Endstellung anlangt, obgleich die durch die Verarbeitungseinheit bestimmte Aufwärts- bzw. die Abwärtszeit noch nicht vollständig abgelaufen ist.

**14.** Vorrichtung nach einem der Ansprüche 10 bis 13,
**dadurch gekennzeichnet, dass** die Tastatur (110) wenigstens einen Berührungsbereich aufweist, der mit Mitteln zum Erkennen eines Feldes zur Auflage eines Fingers auf den Berührungsbereich versehen ist, welcher der Auswahl einer vom Rollladen einzunehmenden Zielposition entspricht, wobei die Erkennungsmittel mit der Verarbeitungseinheit verbunden sind, die durch die Erkennung des Auflagefeldes den Gerätesollwert zu bestimmen und an den Rollladen zu übermitteln vermag, damit dieser die gewählte Zielposition einnimmt.

**15.** Vorrichtung nach Anspruch 14,
**dadurch gekennzeichnet, dass** der Berührungsbereich (110) drei Unterbereiche umfasst, nämlich

- einen für die vom Rollladen einzunehmende obere Endstellung repräsentativen oberen Bereich (110"),
- einen für die vom Rollladen einzunehmende untere Endstellung repräsentativen unteren Bereich (110"), und
- einen zwischen dem oberen und dem unteren Bereich liegenden mittleren Bereich (110'), der für einen zwischen der oberen und der unteren Endstellung gelegenen Bereich von mittleren Positionen repräsentativ ist, die vom Rollladen einzunehmen sind.

**16.** Vorrichtung nach einem der Ansprüche 14 oder 15,
**dadurch gekennzeichnet, dass** die Erkennungsmittel des Berührungsbereichs vom Typ Widerstand sind.

**17.** Vorrichtung nach Anspruch 16,
**dadurch gekennzeichnet, dass** die Erkennungsmittel einen offenen Kreis aufweisen, dessen Klemmen mit der Verarbeitungseinheit verbunden sind und der von zwei kammförmigen Teilen (110a, 110b) gebildet ist, deren Widerstandsrücken im Wesentlichen parallel sind und deren leitende Zähne ineinander verfangen sind, wobei der Berührungsbereich so angeordnet ist, dass die Auflage eines Fingers auf einem Feld des Berührungsbereichs das Schließen des Kreises dadurch bewirkt wird, dass wenigstens ein Zahn eines Teils (110a) mit wenigstens einem Zahn des anderen Teils (110b) in Kontakt gelangt, wobei die Verarbeitungseinheit einerseits Mittel (210) zum Lesen des zwischen den Klemmen des geschlossenen Kreises bestehenden Widerstandswertes umfasst, wobei dieser Widerstandswert für das Auflagefeld repräsentativ ist, und andererseits Mittel (220), um anhand des gelesenen Widerstandswertes einen an den Rollladen zu übermittelnden Gerätesollwert zu bestimmen, damit der Rollladen die entsprechende gewählte Zielposition einnimmt.

**18.** Vorrichtung nach Anspruch 17,
**dadurch gekennzeichnet, dass** der Berührungsbereich mit im Wesentlichen parallelen Leiterbahnen (111) versehen ist, die allgemein quer zu den ineinander verfangenen Zähnen der beiden Teile (110a, 110b) des Kreises über diesen verlaufen, wobei die Leiterbahnen dazu bestimmt sind, beim Auflegen eines Fingers auf den Berührungsbereich mit wenigstens einem Zahn eines jeden Teils des Kreises in Kontakt zu gelangen, um diesen in Höhe des Auflagefeldes zu schießen.

**19.** Vorrichtung nach einem der Ansprüche 10 bis 13,
**dadurch gekennzeichnet, dass** die Tastatur eine verschiebbare Schaltfläche aufweist, die einen Regelwiderstand steuert, wobei das Verschieben der Schaltfläche der Auswahl einer vom Rollladen einzunehmenden Zielposition entspricht, sowie eine Start-Taste, die mit der Verarbeitungseinheit verbunden und in der verschiebbaren Schaltfläche integriert ist, wobei die Verarbeitungseinheit einerseits Mittel zum Lesen des Widerstandswertes des Regelwiderstands bei Betätigung der Start-Taste umfasst, wobei der Widerstandswert für die Position der Schaltfläche repräsentativ ist, und andererseits Mittel, um einen an den Rollladen zu übermittelnden Gerätesollwert anhand des gelesenen Widerstandswertes zu bestimmen, damit dieser die entsprechende gewählte Zielposition einnimmt.

**20.** Vorrichtung nach einem der Ansprüche 10 bis 19,
**dadurch gekennzeichnet, dass** sie Mittel (130) zum Anzeigen der gegenwärtigen Position des Rollladens (300) umfasst, die mit der Verarbeitungseinheit (200) verbunden sind.

**21.** Vorrichtung nach Anspruch 20,
**dadurch gekennzeichnet, dass** die Verarbeitungseinheit (200) die Anzeigemittel nach dem Stoppen des Rollladens in einen Stand-by-Betrieb zu versetzen vermag.

**22.** Vorrichtung nach Anspruch 21,
**dadurch gekennzeichnet, dass** das Versetzen der Anzeigemittel (130) in einen Stand-by-Betrieb in der Verringerung der Lichtintensität der Anzeigemittel besteht.

**23.** Vorrichtung nach einem der Ansprüche 20 bis 22,
**dadurch gekennzeichnet, dass** sie Mittel zum Anzeigen der Positionsänderung des Rollladens umfasst.

**24.** Vorrichtung nach Anspruch 23,
**dadurch gekennzeichnet, dass** sie Mittel zum Anzeigen der Zielposition und gleichzeitig der Positionsänderung des Rollladens umfasst.

**25.** Vorrichtung nach einem der Ansprüche 10 bis 24,
**dadurch gekennzeichnet, dass** sie Mittel zur Markierung der Tastatur umfasst.

**26.** Vorrichtung nach einem der Ansprüche 20 bis 25,
**dadurch gekennzeichnet, dass** die Verarbeitungseinheit (200) Mittel (220) zum Bestimmen eines Anzeigesollwertes anhand des gelesenen Widerstandswertes und Mittel zur Übermittlung des Anzeigesollwertes an die Anzeigemittel umfasst, um die vom Rollladen einzunehmende gewählte Zielposition anzuzeigen.

**27.** Vorrichtung nach einem der Ansprüche 20 bis 26,
**dadurch gekennzeichnet, dass** die Anzeigemittel (130) wenigstens eine Leuchtdiodenreihe (131) umfassen, die gegenüber der Tastatur (110) angeordnet ist.

**28.** Vorrichtung nach einem der Ansprüche 20 bis 26,
**dadurch gekennzeichnet, dass** die Anzeigemittel wenigstens eine Balkendiagrammreihe aufweisen.

**29.** Vorrichtung nach einem der Ansprüche 10 bis 28,
**dadurch gekennzeichnet, dass** die Verarbeitungseinheit (200) umfasst:

- eine Eingangsschnittstelle (210), verbunden mit der Tastatur,
- eine Ausgangsschnittstelle (230), verbunden mit dem Rollladen (300), und
- einen Mikrocontroller (220), verbunden mit der Eingangsschnittstelle (210) und der Ausgangsschnittstelle (230),

wobei die Ausgangsschnittstelle den unter der Kontrolle des Mikrocontrollers (220) bestimmten Gerätesollwert an den Rollladen (300) liefert.

**30.** Vorrichtung nach einem der Ansprüche 10 bis 29,
**dadurch gekennzeichnet, dass** sie ferner eine mit der Verarbeitungseinheit (200) verbundene Taste (120) zum Stoppen des Rollladens (300) umfasst, die

- den Rollladen im Stillstand zu halten vermag, wenn sich der Rollladen (300) im Stillstand befindet und die Stopp-Taste betätigt wird, und

- den Rolladen anzuhalten vermag, wenn sich der Rollladen (300) in Betrieb befindet und die Stopp-Taste betätigt wird.

**31.** Vorrichtung nach Anspruch 30,
**dadurch gekennzeichnet, dass** die Verarbeitungseinheit (200) Mittel zur getrennten Überwachung der Betätigung der Tastatur (110) und der Betätigung der Stopp-Taste (120) umfasst.

**32.** Vorrichtung nach einem der Ansprüche 10 bis 31,
**dadurch gekennzeichnet, dass** sie eine mit der Verarbeitungseinheit verbundene externe Anlage umfasst, wobei die externe Anlage einen Sollwert zur Auswahl einer Zielposition aus dem Bereich vorbestimmter Positionen an die Verarbeitungseinheit zu liefern vermag, die diesen Sollwert an den Rollladen zu übermitteln vermag, damit dieser die gewählte Zielposition einnimmt, wenn diese von der gegenwärtigen Position abweicht.

**33.** Vorrichtung nach Anspruch 32,
**dadurch gekennzeichnet, dass** die Verarbeitungseinheit Mittel zum Verwalten der Prioritäten zwischen den Informationen, die sie von der betätigten Tastatur und der externen Anlage erhält, umfasst, damit die von der Betätigung der Tastatur stammende Information gegenüber der von der externen Anlage stammende Information Vorrang hat.

**34.** Vorrichtung nach einem der Ansprüche 32 oder 33,
**dadurch gekennzeichnet, dass** die externe Anlage eine Wetterzentrale ist.

FIG .1

FIG.2

FIG.3

FIG.4

FIG.5

*FIG.6*

*FIG.7*

FIG.8

CONSIGNE D' APPAREIL = DESCENTE — 1002

1020

FIN COURSE ? — 1021

NON

OUI

LANCER CHRONOMETRE
CONSIGNE D' APPAREIL = MONTEE — 1022

FIN COURSE ? — 1023

NON

OUI

ARRET CHRONOMETRE
LECTURE CHRONOMETRE
TEMPS MONTEE = CHRONOMETRE-K
CONSIGNE D' APPAREIL = ARRET
CONSIGNE DE VISUALISATION = g (R haut)
NIVEAU COURANT = R haut — 1024

## FIG.9

DETERMINATION DU NIVEAU CIBLE — 1004, 1030

NIVEAU CIBLE = NIVEAU COURANT — OUI / 1040 / NON / 1050

COMMANDE DE L'APPAREIL ET DE LA VISUALISATION

## FIG.10

1030

LECTURE VALEUR DE RESISTANCE — 1031

VALEUR DE RESISTANCE > R HAUT ? — 1032 — OUI — NON

NIVEAU CIBLE = R HAUT — 1033

VALEUR DE RESISTANCE < R BAS ? — 1034 — OUI — NON

NIVEAU CIBLE = R BAS — 1035

NIVEAU CIBLE = VALEUR DE RESISTANCE — 1036

FIG. 11

*FIG. 12*

110''

R haut

100

110

110'

C

100

C

130

R bas

130

120

110''

*FIG. 13*

101'    111    110a    102    101'    110b    101

131

103

130

104

131

*FIG. 14*

CONSIGNE DE VISUALISATION

g

Min

R bas          R   R haut

VALEUR
RESISTANCE

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0574637 A